# EUROPEAN PATENT SPECIFICATION

(11) **EP 3 591 328 B1**
(45) Date of publication and mention of the grant of the patent: **17.08.2022**
(21) Application number: 18181389.0
(22) Date of filing: 03.07.2018
(51) Int. Cl.: F28F 9/02, F28F 13/06, F28D 1/04, F28D 7/16, F28D 21/00, F28D 1/02, F28F 19/00, B60K 11/04, B60K 11/08, F01P 3/18, F01P 11/10

(54) **A HEAT EXCHANGER MODULE WITH PROTECTIVE GRID FOR DIRECTING AND DISTRIBUTING AIR**
WÄRMETAUSCHERMODUL MIT SCHUTZGITTER ZUM LEITEN UND VERTEILEN VON LUFT
MODULE D'ÉCHANGEUR DE CHALEUR AVEC GRILLE DE PROTECTION SERVANT À DIRIGER ET À DISTRIBUER DE L'AIR

(43) Date of publication of application: 08.01.2020
(73) Proprietor: Valeo Autosystemy Sp. z o.o., 32-050 Skawina (PL)
(72) Inventor: GODZINA, Radoslaw, 32-050 Skawina (PL); BARUS, Lukasz, 32-050 Skawina (PL); WATOR, Tomasz, 32-050 Skawina (PL); BRANKIEWICZ, Krysztof, 32-050 Skawina (PL)
(74) Representative: Valeo Systèmes Thermiques

(56) References cited:
- WO-A1-2016/177826
- US-A1- 2011 114 286
- US-A1- 2012 085 510
- US-A1- 2012 241 128
- US-A1- 2013 052 000

## Description

The present disclosure relates to a heat exchanger module for a vehicle. Particularly, the present disclosure relates to a heat exchanger module configured with a protective grid system for protecting elements thereof and directing and distributing air over a heat exchanger core.

A vehicle includes several heat exchanger elements. For example, a conventional engine cooling system of a vehicle includes a heat exchanger in form of a radiator to facilitate cooling of an engine of the vehicle. Specifically, a coolant in form of glycol or water-glycol mixture is passed through the engine, from where the coolant absorbs heat and becomes hot. The hot coolant is then fed into an inlet tank of the radiator that is located preferably on top of the radiator, or along one side of the radiator, from the inlet tank the hot coolant is distributed across a radiator core through radiator tubes to another tank on an opposite end of the radiator. As the hot coolant passes through the radiator tubes to the opposite tank, the coolant transfers heat to tubes of the radiator core, which in turn, transfers the heat to fins that are lodged between each row of radiator tubes. The fins then release the heat to the ambient air that flows across the radiator core. For effective and efficient performance of the radiator, there should be unhindered supply of ambient air to the radiator core. In order to save the power consumption in the vehicle, natural draft of air across the radiator core is utilized. For achieving natural draft of air across the radiator core, the radiator core is disposed behind a front grill of the vehicle, wherein the front grill is disposed between a front hood and a front bumper of the vehicle such that the ram air impinges on the front grille of the vehicle as the vehicle moves ahead in forward direction. Such strategic placement of the radiator core enables the ram air to directly impinge on and pass through the radiator core, thereby creating natural draft of air across the radiator core as the vehicle moves ahead in the forward direction. The engine cooling system often incorporates one or more fan elements disposed preferably behind the radiator core to generate a forced draft of air that facilities passage of air through the radiator core. The forced draft generated by the fan elements improves the performance and efficiency of the radiator by improving the air flow rate through the radiator by increasing the air speed. The radiator may be disposed either alone or in series with other heat exchange elements such as for example, a condenser and a chiller that also requires draft of air for efficient operation thereof. Also, the sequence in which the radiator, condenser and chillers are disposed may vary and the position of the radiator and the condenser can interchange, for example, the radiator can be disposed at the front to first receive the ram air and alternatively the condenser can be disposed at the front to first receive the ram air.

However, when the vehicle is travelling in off-road conditions or over a rough terrain, heavier articles such as stones, gravel, and the likes may approach the vehicle, cross the front grill and strike a front face of the heat exchanger core, such as for example, radiator core or condenser core. As a result, the heavier article may cause damage to, particularly, may cause cracks in the heat exchange tubes carrying heat exchange fluid there through. The cracks may cause leakage of the tubes. The continuous leakage of the heat exchange fluid from the heat exchange tubes may result in problems such as pressure loss inside the heat exchanger tubes, heat exchanger tank requiring frequent refilling and inefficient operation of the heat exchanger due to insufficient heat exchange fluid. Conditions such as dropping of heat exchange fluid levels in the heat exchanger, for example radiator below critical level may render the radiator inefficient, thereby resulting in engine seizure due to excessive heat. The cracks may also act as points of stress concentration, thereby may cause mechanical failure. In case the heavier articles strike the delicate fin elements disposed between adjacent tubular elements, the fin elements may get damaged and not function as per design, thereby deteriorating efficiency and performance of the heat exchanger. Also, the high speed ram air often carries therewith lighter articles such as paper, empty polythene bags, leaves and the likes, that may reach the front face of the heat exchanger core and may get struck over there due to draft of air created by the at least one fan element or the ram air. Most often, these lighter articles accumulate in the space behind the front grille and in front of the heat exchanger core, thereby causing hindrance to air flow and preventing ram air from reaching and entering the heat exchanger core, thereby deteriorating efficiency and performance of the heat exchanger.

Certain prior art suggest placing a grid over the front face of the heat exchanger core to prevent heavier articles from impacting the heat exchanger core and prevent lighter articles from accumulating in front of the heat exchanger core. In some cases the grid is disposed spaced from the radiator or the condenser core. Such arrangement facilitates in dissipating energy of the heavier article as the heavier article travels through space between the front grille and the radiator core. Also, depending upon the configuration of the housing receiving the heat exchanger core, the heat exchanger core may be either disposed orthogonally or at an inclination with respect to direction of the ram air. Considering such design limitations, the ram air often fails to cover majority of the surface of the heat exchanger core, thereby limiting utilization of ram air for cooling of the heat exchanger core. US-A-2012241128 discloses a heat exchanger module according to the preamble of claim 1.

Accordingly, there is a need for a heat exchanger module configured with a protective grid system that not only protects the heat exchanger core such as radiator and/or condenser core but also directs and distributes the ram air over maximum surface of the heat exchanger core, thereby resulting in better utilization of the ram air for cooling the heat exchanger and improving the performance and efficiency of the heat exchanger. Further, there is a need for a heat exchanger module configured with a protective grid system that acts as a barrier in front of the radiator or condenser core and prevents heavier articles such as stones from impacting and damaging the radiator and/or condenser core, while still not compromising air flow through the radiator or condenser core. Also, there is a need for a heat exchanger module configured with a protective grid system that prevents lighter articles such as paper, polythene bags and leaves from getting in to path of ram air approaching the radiator or condenser core and deteriorating efficiency and performance of the radiator or condenser respectively, while still not comprising air flow through the radiator or condenser core.

An object of the present invention is to provide a heat exchanger module configured with a protective grid system that not only protects a heat exchanger core but also directs and distributes the ram air over maximum surface of the heat exchanger core.

Another object of the present invention is to provide a heat exchanger module configured with a protective grid system that achieves better utilization of the ram air for cooling a heat exchanger, thereby improving efficiency and performance of the heat exchanger.

Still another object of the present invention is to provide a heat exchanger module configured with a protective grid system that protects a heat exchanger core against damage from impact of heavier articles such as stones and gravel, while still not compromising air flow through the heat exchanger core.

Yet another object of the present invention is to provide a heat exchanger module configured with a protective grid system that prevents lighter articles such as paper, polythene bags and leaves from getting in to path of ram air approaching a heat exchanger core, while still not compromising air flow through the heat exchanger core.

Still another object of the present invention is to provide a heat exchanger module configured with a protective grid system that can be easily retrofitted over current heat exchangers without requiring many modifications.

Another object of the present invention is to provide a heat exchanger module configured with a protective grid system that enhances service life of a heat exchanger and reduces maintenance thereof.

Yet another of the present invention is to provide a heat exchanger module configured with a protective grid system that is inexpensive and also convenient to manufacture, assemble and use.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In accordance with an embodiment of the invention, a heat exchanger module according to claim 1 is disclosed. The heat exchanger module includes housing, an air inlet duct, at least one fan device and a grid. The housing receives therein at least one heat exchanger core. The air inlet duct configured over the housing covers at least a portion of a surface of the at least one heat exchanger core and configures an opening. The at least one fan device is received within the housing. The fan device generates pressure difference across the at least one heat exchanger core for facilitating flow of fluid there through. The grid is mounted over the opening of the air inlet duct such that the grid is spaced from the at least one heat exchanger core. The grid includes an array of beams that configures restricted passages. The beams are so configured, spaced and oriented with respect to each other that the beams direct and distribute fluid impinging on said grid over the surface of the at least one heat exchanger core covered by the air inlet duct.

Generally, the housing receives therein different heat exchangers that are disposed in series, wherein each heat exchanger is preferably either one of condenser, radiator, charge-air cooler and chiller.

In accordance with an embodiment of the present invention, the air inlet duct is so configured that internal profile of the air inlet duct in conjunction with the beams configured on the grid direct and distribute fluid impinging on the grid over entire portion of the surface of the at least one heat exchanger core covered by the air inlet duct.

Further, the grid includes first engagement elements configured thereon that engages with complimentary second engagement elements configured on the air inlet duct for facilitating detachable mounting of the grid over the opening of the air inlet duct.

In accordance with an embodiment of the present invention, the engagement elements are either one of clips, screws and expansion pins.

Generally, the orientation of the beams configuring the grid varies from one section to another section of the grid.

Particularly, the orientation of the beams formed an angle included between 2 and 45° with the transversal axis of the grid.

In accordance with an embodiment of the present invention, configuration of the beams configuring the grid varies from one section to another section of the grid.

In accordance with an embodiment of the present invention, the grid is of metal and is configured by stamping process.

Alternatively, the grid is of composite plastic material and is configured by molding process.

Generally, the grid is received in sockets configured around a collar of the air inlet duct.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIGURE 1** illustrates a schematic representation of a heat exchanger module in accordance with an embodiment of the present invention, wherein a grid of a protective grid system is mounted in spaced apart configuration and at an inclination relative to a heat exchanger core of the heat exchanger module;
**FIGURE 2** illustrates an isometric view of the heat exchanger module of **FIGURE 1****,** also is depicted schematic representation of the grid and an enlarged view of the grid depicting inclination of beams configuring the grid;
**FIGURE 3a** illustrates a schematic representation of the grid of **FIGURE 1** with first engagement elements configured along at least a portion of a longitudinal edge of the grid in a disengaged configuration with respect to complementary second engagement elements configured on at least a portion of a corresponding longitudinal edge of an air inlet duct in accordance with an embodiment of the present invention;
**FIGURE 3b** illustrates a schematic representation of the grid with the first engagement elements thereof in an engaged configuration with respect to the complementary second engagement elements of **FIGURE 3a****;**
**FIGURE 4a** illustrates a schematic representation of the grid of **FIGURE 1** with a first engagement element configured along a lateral edge of the grid in a disengaged configuration with respect to a complementary second engagement element configured on a corresponding lateral edge of an air inlet duct; and
**FIGURE 4b** illustrates a schematic representation of the grid with the first engagement element thereof in an engaged configuration with respect to the complementary second engagement element of **FIGURE 4a****.**

The present invention envisages a heat exchanger module configured with a protective grid system that includes at least one grid mounted in a spaced apart configuration and at an inclination with respect to at least one heat exchanger core, such as for example, a radiator core and/or condenser core. The beams configuring the grid not only protects the heat exchanger core but also directs and distributes the ram air over maximum surface of the heat exchanger core, thereby achieving proper utilization of the ram air for improving efficiency and performance of the heat exchanger. Although, the protective grid system of the present invention is used in heat exchangers, such as radiators, condensers and evaporators that are used in vehicles, however, the protective grid system of the present invention is also applicable to any other heat exchangers used in non-vehicular systems such as generators that also involve air draft for achieving better performance of the heat exchanger.

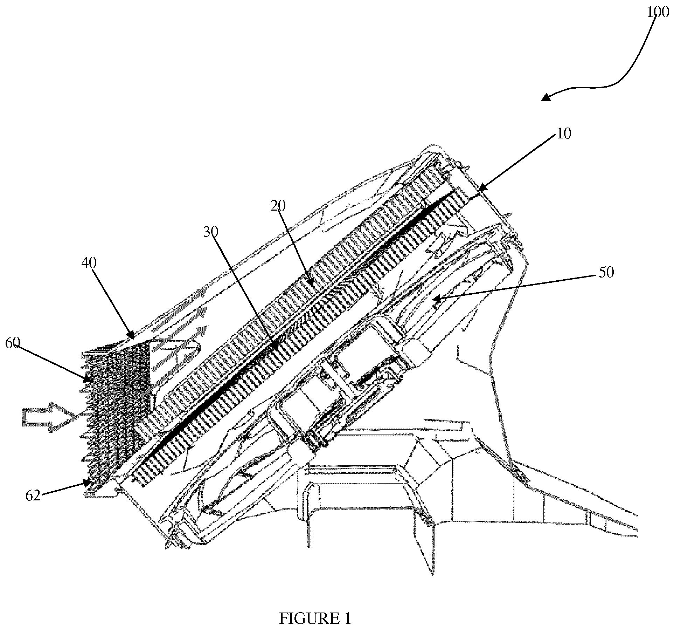

Referring to **FIGURE 1****,** a schematic representation of a heat exchanger module **100** configured with a protective grid system in accordance with an embodiment of the present invention is illustrated. The heat exchanger module **100** includes housing **10,** an air inlet duct **40,** at least one fan device **50** and a grid **60.**

The housing **10** receives therein at least one heat exchanger cores **20, 30.** Specifically, the housing **10** receives therein different heat exchanger cores that are disposed in series, wherein each heat exchanger core is preferably either one of a condenser, a radiator, a charge-air cooler and a chiller. Also, the sequence in which the radiator, condenser and chillers are disposed may vary, for example, the position of the radiator **20** and the condenser **30** may interchange based on design, packaging and other constrains, for example, the radiator can be disposed at the front to first receive the ram air and alternatively the condenser can be disposed at the front to first receive the ram air. The housing **10** is so configured to support the heat exchanger cores **20, 30** that the ram air either impinges either one of the heat exchanger cores **20, 30** either orthogonally or at some inclination.

The air inlet duct **40** is configured over the housing **10** and covers at least a portion of a surface of the at least one heat exchanger core **20, 30** and configures an opening **42.** The air inlet duct **40** includes engagement elements **44** and **44'** configured along at least one portion of at least one of the opposite longitudinal edges and at least one portion of at least one of the opposite lateral edges thereof respectively.

The at least one fan device **50** is received within the housing **10.** Preferably, the at least one fan device **50** is disposed downstream of the at least one heat exchanger core **20, 30** that in turn is disposed within the housing **10.** The fan device **50** generates pressure difference across the at least one heat exchanger core **20, 30** for facilitating flow of fluid there through. However, the present invention is not limited to any particular configuration and position of the at least one fan device **50** as far as the at least one fan device **50** is able to generate pressure difference across the at least one heat exchanger core **20, 30** for facilitating flow of fluid/ ram air there through.

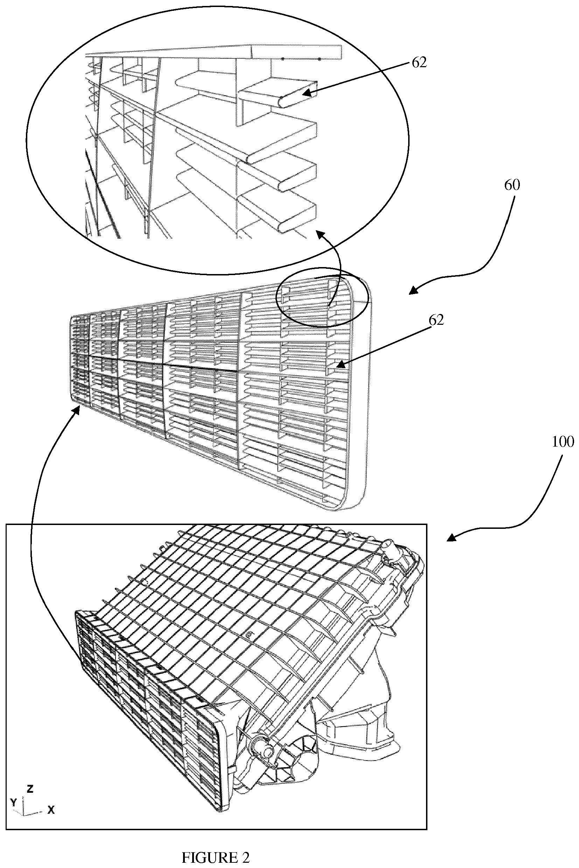

In accordance with an embodiment, the grid **60** includes an array of elements defining restricted air flow passages **64,** also simply referred to as air passages **64** that restrain passage of articles of a predetermined size but facilitates air flow there through. In accordance with a preferred embodiment, the elements are an array of horizontally and vertically disposed beams **62** that cross each other to configure the restricted air flow passages **64.** **FIGURE 2** illustrates an isometric view of the heat exchanger module **100** along with a schematic representation of the grid **60** and an enlarged view of the grid depicting inclination of the beams **62** configuring the grid **60.** The beams **62** are so configured, spaced and oriented with respect to each other that the beams **62** direct and distribute ram air impinging on the grid **60** over the entire or maximum surface of the at least one heat exchanger core **20, 30** covered by the air inlet duct **40,** thereby resulting in better utilization of the ram air for cooling the at least one heat exchanger cores **20, 30** and improving efficiency and performance of the heat exchanger. In accordance with an embodiment, the beams **62** configured on the grid **60** in conjunction with the internal profile of the air inlet duct **40** directs and distributes the ram air impinging on the grid **60** over entire or maximum portion of the surface of the at least one heat exchanger core **20, 30** covered by the air inlet duct **40.** In accordance with an embodiment of the present invention, the orientation of the beams **62** configuring the grid **60** varies from one section to another section of the grid **60.** In accordance with an embodiment, the orientation of the beams **62** formed an angle included between 2 and 45° with the plane XY, represented by main datum system XYZ in **FIGURE 2****.** The plane XY is defined as a plane parallel along the breadth or width of the grid **60** and is also perpendicular to the longitudinal axis Z. In accordance with still another embodiment of the present invention, the configuration of the beams **62** configuring the grid **60** varies from one section to another section of the grid **60.** Any modification may be configured in the beams **62,** to enable the beams **62** direct and distribute air impinging on the grid **60** over the entire or maximum surface of the at least one heat exchanger core **20, 30** covered by the air inlet duct **40.** With such configuration of the grid **60** and the air inlet duct **40,** the ram air is directed and distributed over either entire or maximum surface of the at least one heat exchanger core **20, 30,** thereby resulting in better utilization of the ram air for cooling the at least one heat exchanger cores **20, 30** and improving efficiency and performance of the heat exchanger. In accordance with another embodiment, the elements are honeycomb structures that configure the restricted air passages. Such configuration of the grid **60** protects the at least one heat exchanger core **20, 30** against damage from impact of heavier articles such as stones and gravel, while still not compromising air flow through the at least one heat exchanger core **20, 30.** Also such configuration of the grid **60** prevents lighter articles such as paper, polythene bags and leaves from getting in to path of ram air approaching the at least one heat exchanger core **20, 30,** while still not compromising air flow through the heat exchanger core **20, 30.** Such configuration of the grid **60** enhances service life of the heat exchanger and reduces maintenance thereof.

In accordance with an embodiment, the grid **60** is of metal and is configured by stamping process. In accordance with another embodiment, the grid **60** is of plastic material and is configured by molding process with the beams or honeycomb structures integrally configured thereon during single step molding process. However, the grid **60** of the present invention is not limited to any particular configuration of the elements configuring the grid **60** and any particular material or process used for configuring the grid **60** as far as the grid **60** directs and distributes the ram air over entire or maximum surface of the heat exchanger core **20, 30** for better utilization of the ram air for cooling the heat exchanger and improving efficiency and performance of the heat exchanger. The grid **60** also acts as a barrier for preventing heavier articles such as stones and gravel from striking and damaging the at least one heat exchanger core **20, 30** and lighter articles such as paper, polythene bags and leaves from getting in to path of ram air approaching the at least one heat exchanger core **20, 30** while still not compromising air flow through the at least one heat exchanger core **20, 30.**

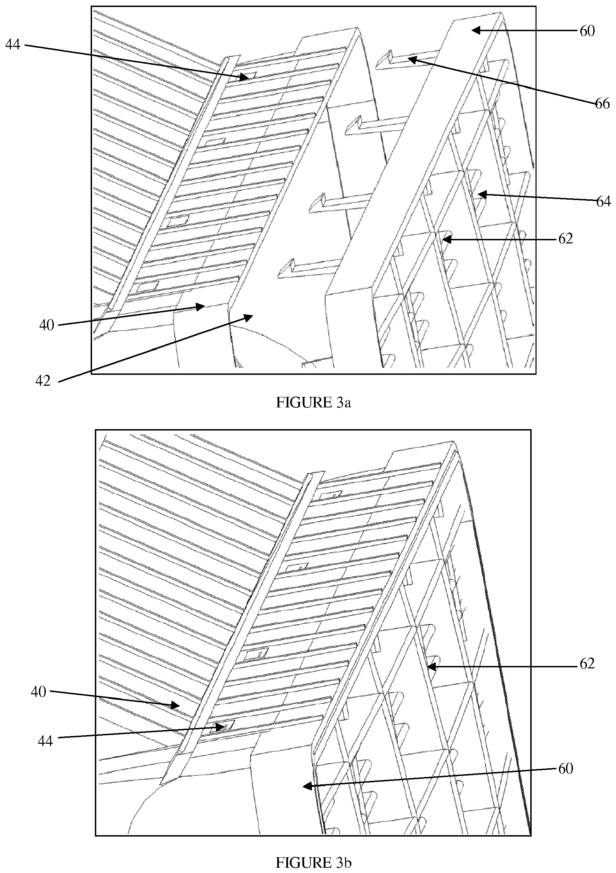

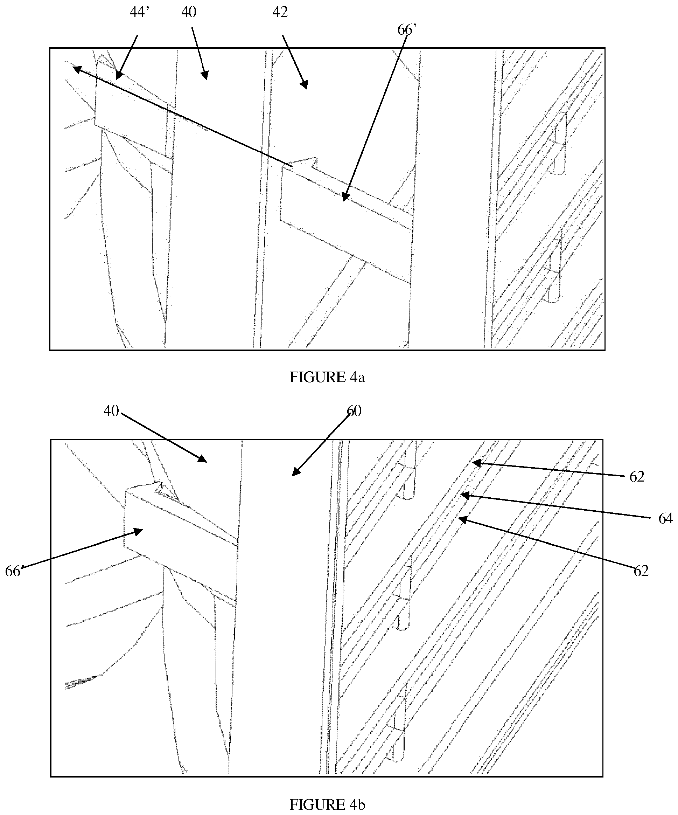

Again referring to **FIGURE 1****,** the grid **60** is mounted in spaced apart configuration and at an inclination relative to the at least one heat exchanger core **20, 30** to meet certain design requirements. In accordance with an embodiment of the present invention, the grid **60** is configured with at least one first engagement elements **66** and **66'** configured along at least a portion of at least one of the opposite longitudinal edges and at least one portion of at least one of the opposite lateral edges of the grid **60** respectively that engage with corresponding complementary second engagement elements **44** and **44'** configured along at least a portion of at least one of the opposite longitudinal edges and at least a portion of at least one of the opposite lateral edges of the air inlet duct **40** respectively. The grid **60** along with the engagement elements **66** and **66'** configured on the grid **60** and the corresponding engagement elements **44** and **44'** configured on the air inlet duct **40** collectively configures a protective grid system that can be easily retrofitted over current heat exchanger modules without requiring many modifications. Refer to **FIGURE 3a** to **FIGURE 4b** of the accompanying drawings depicting the engagement between the first engagement elements **66** and **66'** and the corresponding complementary second engagement elements **44** and **44'** for configuring detachable mounting of the grid **60** over the opening **42** configured by the air inlet duct **40.** More specifically, the **FIGURE 3a** illustrates a schematic representation of the grid **60** with the first engagement elements **66** configured along at least a portion of a longitudinal edge thereof in a disengaged configuration with respect to corresponding complementary second engagement elements **44** configured along at least a portion of a corresponding longitudinal edge of the air inlet duct **40.** **FIGURE 3b** illustrates a schematic representation of the grid **60** with the first engagement elements **66** thereof in an engaged configuration with respect to the complementary second engagement elements **44.** **FIGURE 4a** illustrates a schematic representation of the grid **60** with a first engagement element **66'** configured on a lateral edge of the grid **60** in a disengaged configuration with respect to a complementary second engagement element **44'** configured on a corresponding lateral edge of the air inlet duct **40.** **FIGURE 4b** illustrates a schematic representation of the grid 60 with the first engagement elements **66'** thereof in an engaged configuration with respect to the complementary second engagement elements **44'.** In accordance with an embodiment of the present invention the engagement elements **66** and **66'** are either one of clips, screws and expansion pins. In accordance with an embodiment of the present invention the engagement elements **66** and **66'** are snap fitting engagement elements. In accordance with still another embodiment, the grid **60** is received in sockets configured around a collar of the air inlet duct **40.** However, the present invention is not limited to any particular configuration and placement of the engagement elements **66** and **66'** as far as these elements configure detachable engagement between the grid **60** and the air inlet duct **40.** In accordance with another embodiment of the present invention, the grid **60** is integrally formed over the opening **42** of the air inlet duct **40.**

Several modifications and improvement might be applied by the person skilled in the art to the protective grid system as defined above, as long as it comprises housing, an air inlet duct, at least one fan device and a grid. The housing receives therein at least one heat exchanger core. The air inlet duct configured over the housing covers at least a portion of a surface of the at least one heat exchanger core and configures an opening. The at least one fan device is received within the housing generates pressure difference across the at least one heat exchanger core for facilitating flow of fluid there through. The grid is mounted over the opening of the air inlet duct and includes an array of beams that configures restricted passages. The beams are so configured, spaced and oriented with respect to each other that the beams direct and distribute fluid impinging thereon over the surface of the at least one heat exchanger core covered by the air inlet duct.

In any case, the invention cannot and should not be limited to the embodiments specifically described in this document, as other embodiments might exist within the scope of the invention as defined in the appended claims.

## Claims

1. A heat exchanger module (100) comprising:
• a housing (10) adapted to receive therein at least one heat exchanger core (20, 30);
• an air inlet duct (40) configured over said housing (10) and adapted to cover at least a portion of a surface of said at least one heat exchanger core (20, 30) and configure an opening (42);
• at least one fan device (50) received within said housing (10) and adapted to generate pressure difference across said at least one heat exchanger core (20, 30) for facilitating flow of fluid there through, **characterised by**
• a grid (60) adapted to be mounted over said opening (42) of said air inlet duct (40),
wherein
said grid (60) is spaced from said at least one heat exchanger core (20, 30) and it is at an inclination with respect to at least one heat exchanger core (20, 30), said grid (60) comprising an array of beams (62) adapted to configure restricted passages (64), said beams (62) are so configured, spaced and oriented with respect to each other that said beams (62) are adapted to direct and distribute fluid impinging on said grid (60) over said surface of said at least one heat exchanger core (20, 30) covered by said air inlet duct (40), wherein orientation of said beams (62) configuring said grid (60) vary from one section to another section of said grid (60).

2. The heat exchanger module (100) as claimed in the preceding claim, wherein said housing (10) is adapted to receive therein different heat exchangers that are disposed in series, each heat exchanger is preferably either one of condenser, radiator, charge-air cooler and chiller.

3. The heat exchanger module (100) as claimed in any of the preceding claims, wherein said air inlet duct (40) is so configured that internal profile of said air inlet duct (40) in conjunction with said beams (62) configured on said grid (60) are adapted to direct and distribute fluid impinging on said grid (60) over entire portion of said surface of said at least one heat exchanger core (20, 30) covered by said air inlet duct (40).

4. The heat exchanger module (100) as claimed in any of the preceding claims, wherein said grid (60) further comprises first engagement elements (66, 66') configured thereon and adapted to engage with complimentary second engagement elements (44, 44') configured on said air inlet duct (40) for facilitating detachable mounting of said grid (60) over said opening (42) of said air inlet duct (40).

5. The heat exchanger module (100) as claimed in the preceding claim, wherein said engagement elements are either one of clips, screws and expansion pins.

6. The heat exchanger module (100) as claimed in the preceding claim, wherein said orientation of said beams (62) formed an angle comprised between 2 and 45° with the transversal axis of said grid (60).

7. The heat exchanger module (100) as claimed in any of the preceding claims, wherein configuration of said beams (62) configuring said grid (60) vary from one section to another section of said grid (60).

8. The heat exchanger module (100) as claimed in any of the preceding claims, wherein said grid (60) is of metal and is configured by stamping process.

9. The heat exchanger module (100) as claimed in any of claims 1 to 6, wherein said grid (60) is of composite plastic material and is configured by molding process.

10. The heat exchanger module (100) as claimed in any of the preceding claims, wherein said grid (60) is received in sockets configured around a collar of said air inlet duct (40).

## Patentansprüche

1. Wärmetauschermodul (100), umfassend:
ein Gehäuse (10), das zur Aufnahme von mindestens einem Wärmetauscherkern (20, 30) darin eingerichtet ist;
einen Lufteinlasskanal (40), der über dem Gehäuse (10) ausgelegt und dazu eingerichtet ist, mindestens einen Abschnitt einer Oberfläche des mindestens einen Wärmetauscherkerns (20, 30) zu bedecken und eine Öffnung (42) auszulegen;
mindestens eine Gebläsevorrichtung (50), die im Gehäuse (10) aufgenommen ist und dazu eingerichtet ist, Druckdifferenz über den mindestens einen Wärmetauscherkern (20, 30) zu erzeugen, um die Strömung eines Fluids durch diesen hindurch zu ermöglichen, **gekennzeichnet durch**
ein Gitter (60), das dazu eingerichtet ist, über der Öffnung (42) des Lufteinlasskanals (40) montiert zu werden, wobei das Gitter (60) vom mindestens einen Wärmetauscherkern (20, 30) beabstandet ist und sich in einer Neigung in Bezug auf den mindestens einen Wärmetauscherkern (20, 30) befindet, wobei das Gitter (60) ein Array von Streben (62) umfasst, das dazu eingerichtet ist, eingeschränkte Durchgänge (64) auszulegen, wobei die Streben (62) so ausgelegt, beabstandet und in Bezug aufeinander ausgerichtet sind, dass die Streben (62) dazu eingerichtet sind, Fluid, das auf das Gitter (60) auftrifft, über die Oberfläche des mindestens einen Wärmetauscherkerns (20, 30), der vom Lufteinlasskanal (40) bedeckt ist, zu leiten und zu verteilen, wobei die Ausrichtung der Streben (62), die das Gitter (60) auslegen, von einem Abschnitt zu einem anderen Abschnitt des Gitters (60) variiert.

2. Wärmetauschermodul (100) nach dem vorhergehenden Anspruch, wobei das Gehäuse (10) dazu eingerichtet ist, darin verschiedene Wärmetauscher aufzunehmen, die in Reihe eingerichtet sind, wobei jeder Wärmetauscher vorzugsweise eines von einem Kondensator, einem Kühler, einem Ladeluftkühler und einem Kältererzeuger ist.

3. Wärmetauschermodul (100) nach einem der vorhergehenden Ansprüche, wobei der Lufteinlasskanal (40) so ausgelegt ist, dass das Innenprofil des Lufteinlasskanals (40) in Verbindung mit den auf dem Gitter (60) ausgelegten Streben (62) dazu eingerichtet ist, auf das Gitter (60) auftreffendes Fluid über den gesamten Abschnitt der Oberfläche des mindestens einen Wärmetauscherkerns (20, 30), der vom Lufteinlasskanal (40) bedeckt ist, zu leiten und zu verteilen.

4. Wärmetauschermodul (100) nach einem der vorhergehenden Ansprüche, wobei das Gitter (60) ferner erste Eingriffselemente (66, 66') umfasst, die darauf ausgelegt und dazu eingerichtet sind, mit komplementären zweiten Eingriffselementen (44, 44') in Eingriff zu kommen, die am Lufteinlasskanal (40) ausgelegt sind, zu dem Zweck, eine abnehmbare Montage des Gitters (60) über der Öffnung (42) des Lufteinlasskanals (40) zu ermöglichen.

5. Wärmetauschermodul (100) nach dem vorhergehenden Anspruch, wobei die Eingriffselemente eines von Klammern, Schrauben und Spreizstiften sind.

6. Wärmetauschermodul (100) nach dem vorhergehenden Anspruch, wobei die Ausrichtung der Streben (62) einen Winkel zwischen 2 und 45° mit der Querachse des Gitters (60) bildet.

7. Wärmetauschermodul (100) nach einem der vorhergehenden Ansprüche, wobei die Auslegung der Streben (62), die das Gitter (60) auslegen, von einem Abschnitt zu einem anderen Abschnitt des Gitters (60) variiert.

8. Wärmetauschermodul (100) nach einem der vorhergehenden Ansprüche, wobei das Gitter (60) aus Metall besteht und durch ein Stanzverfahren ausgelegt ist.

9. Wärmetauschermodul (100) nach einem der Ansprüche 1 bis 6, wobei das Gitter (60) aus einem Kunststoffverbundmaterial besteht und durch ein Formgebungsverfahren ausgelegt ist.

10. Wärmetauschermodul (100) nach einem der vorhergehenden Ansprüche, wobei das Gitter (60) in Aufnahmen aufgenommen ist, die um einen Kragen des Lufteinlasskanals (40) herum angeordnet sind.

## Revendications

1. Module d'échangeur de chaleur (100), comprenant :
• un boîtier (10) adapté pour recevoir dans celui-ci au moins un faisceau d'échangeur de chaleur (20, 30) ;
• un canal d'entrée d'air (40) configuré au-dessus dudit boîtier (10) et adapté pour couvrir au moins une partie d'une surface dudit au moins un faisceau d'échangeur de chaleur (20, 30) et configurer une ouverture (42) ;
• au moins un dispositif ventilateur (50) reçu à l'intérieur dudit boîtier (10) et adapté pour générer une différence de pression dans ledit au moins un faisceau d'échangeur de chaleur (20, 30) pour faciliter l'écoulement de fluide à travers celui-ci, **caractérisé par**
• une grille (60) adaptée pour être montée au-dessus de ladite ouverture (42) dudit canal d'entrée d'air (40), dans lequel ladite grille (60) est espacée dudit au moins un faisceau d'échangeur de chaleur (20, 30) et elle est à une inclinaison par rapport à au moins un faisceau d'échangeur de chaleur (20, 30), ladite grille (60) comprenant un réseau de barreaux (62) adaptés pour configurer des passages limités (64), lesdits barreaux (62) sont configurés, espacés et orientés les uns par rapport aux autres pour que lesdits barreaux (62) soient adaptés pour diriger et distribuer un fluide incident sur ladite grille (60) au-dessus de ladite surface dudit au moins un faisceau d'échangeur de chaleur (20, 30) couverte par ledit canal d'entrée d'air (40), dans lequel l'orientation desdits barreaux (62) configurant ladite grille (60) varie d'une section à une autre section de ladite grille (60).

2. Module d'échangeur de chaleur (100) selon la revendication précédente, dans lequel ledit boîtier (10) est adapté pour recevoir dans celui-ci différents échangeurs de chaleur qui sont disposés en série, chaque échangeur de chaleur est de préférence un parmi condenseur, un radiateur, radiateur de refroidissement d'air de suralimentation et refroidisseur.

3. Module d'échangeur de chaleur (100) selon l'une quelconque des revendications précédentes, dans lequel ledit canal d'entrée d'air (40) est configuré pour qu'un profil interne dudit canal d'entrée d'air (40) conjointement avec lesdits barreaux (62) configurés sur ladite grille (60) soient adaptés pour diriger et distribuer un fluide incident sur ladite grille (60) au-dessus de la partie entière de ladite surface dudit au moins un faisceau d'échangeur de chaleur (20, 30) couverte par ledit canal d'entrée d'air (40).

4. Module d'échangeur de chaleur (100) selon l'une quelconque des revendications précédentes, dans lequel ladite grille (60) comprend en outre des premiers éléments d'entrée en prise (66, 66') configurés sur celui-ci et adaptés pour entrer en prise avec des seconds éléments d'entrée en prise complémentaires (44, 44') configurés sur ledit canal d'entrée d'air (40) pour faciliter le montage détachable de ladite grille (60) au-dessus de ladite ouverture (42) dudit canal d'entrée d'air (40).

5. Module d'échangeur de chaleur (100) selon la revendication précédente, dans lequel lesdits éléments d'entrée en prise sont un parmi des pièces de fixation, des vis et des chevilles expansibles.

6. Module d'échangeur de chaleur (100) selon la revendication précédente, dans lequel ladite orientation desdits barreaux (62) forme un angle compris entre 2 et 45° avec l'axe transversal de ladite grille (60).

7. Module d'échangeur de chaleur (100) selon l'une quelconque des revendications précédentes, dans lequel la configuration desdits barreaux (62) configurant ladite grille (60) varie d'une section à une autre section de ladite grille (60).

8. Module d'échangeur de chaleur (100) selon l'une quelconque des revendications précédentes, dans lequel ladite grille (60) est de métal et est configurée par l'intermédiaire d'un procédé d'estampage.

9. Module d'échangeur de chaleur (100) selon l'une quelconque des revendications 1 à 6, dans lequel ladite grille (60) est de matériau plastique composite et est configurée par l'intermédiaire d'un procédé de moulage.

10. Module d'échangeur de chaleur (100) selon l'une quelconque des revendications précédentes, dans lequel ladite grille (60) est reçue dans des douilles configurées autour d'un collet dudit canal d'entrée d'air (40).
